Europäisches Patentamt

European Patent Office

Office européen des brevets

(19)

(11) Publication number: **0 182 394 B1**

(12) **EUROPEAN PATENT SPECIFICATION**

(45) Date of publication of patent specification: **22.07.92**　(51) Int. Cl.⁵: **G01D 18/00**, G01D 3/02

(21) Application number: **85201332.5**

(22) Date of filing: **20.08.85**

(54) **A method of increasing the accuracy of a length measuring system by calibrating the system against a more accurate reference system.**

(30) Priority: **28.08.84 SE 8404266**

(43) Date of publication of application:
**28.05.86 Bulletin 86/22**

(45) Publication of the grant of the patent:
**22.07.92 Bulletin 92/30**

(84) Designated Contracting States:
**DE FR GB**

(56) References cited:
**EP-A- 0 048 851**
**DE-A- 3 128 095**
**US-A- 4 084 248**

**TECHNISCHES MESSEN, vol. 48, no. 7/8, July/August 1981, pages 239-248, Munich, DE; K. KRONMÜLLER: "Parametrische und strukturelle Massnahmen zur Verbesserung der stationären Kennlinie von Messeinrichtungen"**

(73) Proprietor: **C E Johansson AB**
**Mätt Johanssons väg/Fraktgatan 6**
**S-631 81 Eskilstuna(SE)**

(72) Inventor: **Gustafsson, Carl-Erik**
**Rektorsvägen 19**
**S-633 44 Eskilstuna(SE)**

(74) Representative: **Örtenblad, Bertil Tore**
**Noréns Patentbyra AB Box 27034**
**S-102 51 Stockholm(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 182 394 B1

## Description

The present invention relates to a method of increasing the accuracy of a length measuring system, by calibrating the system against a more accurate reference system. The method involves the subsequent improvement in the accuracy of a scale produced initially with low accuracy requirements, through the agency of a calibrating procedure from which the correction values added to or subtracted from the pertinent measuring result are obtained.

Length measuring systems, for example digital-type length measuring systems intended for use in conjunction with metal-working machines for example, are required to be highly accurate. The maximum errors permitted are often solely in the order of some few micrometers in respect of lengths of from one to two meters.

Consequently the system components must be extremely accurate especially the length scale forming the length base of the measuring system, this scale being an optical, magnetic, inductive or capacitive type scale. As a result, the costs of manufacturing such systems are high, particularly when the systems are intended for measuring long lengths. Even though a correct scale may be produced successfully, systematic faults or errors may occur in the machine in which the scale is incorporated, inter-alia due to varying degrees of outward prominence at mutually different positions on the machine for example. Consequently, high precision requirements are placed on machines in which such scale systems are to be installed.

In one well known method of eliminating systematic length errors in scale systems the scale is calibrated, i.e. the values registered by the scale are compared with a reference value taken from a more accurate system and the values of the differences obtained in respect of each scale division or graduation are recorded on a calibration protocol or calibration diagram. When using the calibrated scale system, the scale is read off and the correction value for the relevant scale - graduation measurement-value is then taken from the calibration protocol and added to (or subtracted from) the value read-off from the scale. If the calibration is effected subsequent to incorporating the scale system in a machine, errors which originate as a result of incorporating the scale and being of a systematic nature (i.e. occurring at the same location and being of the same magnitude) will also be compensated by the calibration. This lowers the requirements on machine construction and precision, and therewith reduces costs.

Correspondingly, it is conceivable in a digital length measuring system to store correction values in a memory, for example an electronic, preferably digital memory unit thereby to enable a corresponding correction value to be sought for each measurement value with the aid of date techniques, and the correction carried out.

In order to be able to relate the stored correction values to respective measurement values, it is necessary for all measurement values to depart from a fixed reference point. In the case of conventional incremental scale systems, this can be achieved by moving the measuring slide against a fixed abutment at one end of the scale and there setting the slide to zero. One disadvantage with this procedure, however, is that it must be carried out each time the supply voltage of the measuring system is interrupted. Another disadvantage is that in the event of mechanical changes in the position of the fixed abutment, due to thermal expansion, wear or dust between surfaces for example, the fixed reference point will be displaced relative to the position given thereto during calibration of the system.

A further problem can occur if the error curve of the scale is highly stochastic. In such a case it will be necessary, in the worst of cases, to provide separate correction values for each individual part increment of the measuring scale. In the case of a scale one meter in length and a one micromilimeter resolution, it would be necessary to store 1000 . 1000 = 1 million correction values in the store unit.

DE - AI - 3 128 095 discloses a method and a system for correcting non-linear sensors. A non-linear curve being devided into linear pieces and linear interpolation being used within each such piece. Such technique, however, does not solve the above identified problems of linear scale systems.

Further: EP-A-0 048 851 discloses a correction method for a digital length measuring system, using an incremental interpolating system, which is associated with some of the problems identified earlier and which does not offer an acceptable solution.

The object of the present invention is to eliminate the above identified disadvantages. This object is achieved by means of a method according to the invention having the characteristic features set forth in Claim 1.

Further developments of the invention are disclosed in the depending claims.

In accordance with the invention there is used a scale which includes in itself absolute position information, without the aid of external fixed abutments for example. This eliminates the aforedescribed disadvantages associated with setting the scale to zero with the aid of a fixed abutment. Such an absolute measuring system may be constructed in the manner described in GB-A-2 009 944 corresponding to Swedish patent specification 7714010-1 (pages 9-10) or in GB-A-1 595 127 corresponding to Swedish patent specification 7805231-3 for example.

There is also used in accordance with the invention a detecting or sensing system having a scale system which is permitted to have an error contribution greater than a given permitted error of the detecting system. This can be effected by causing the error contribution to gradually rise or fall. This reduces the space requirement of the digital memory unit. Optical, inductive or capacitive type length measuring systems having gradually rising or falling error curvs are per se perviously known and are primarily based on the principle of including more than one scale graduation on the scale when reading off the measurement value, there being formed a mean value with which the particular error of each scale graduation will only influence the total error image by a fraction of its total value.

The method according to the invention enables systematic errors to be eliminated by calibration, it being meant by systematic errors those errors of mutually the same magnitude which occur repeatedly at mutually the same locations with repeated measuring operations. In order to be able to calibrate a scale it is necessary for its repeatability, i.e. its ability to register the same measurement at the same location on the scale, to be in suitable relationship with the desired accuracy of calibration and the incremental steps between the correction values stored in the memory unit.

In order to explain the aforegoing, we can assume by way of example that a measuring system has a repeatability of $\pm$ I $\mu$m and that the greatest step between two values in the calibrating memory is $\pm$ 1 $\mu$m and that finally remaining errors occurring when effecting the calibrating measurement are $\pm$ I $\mu$m. The systematic intrinsic error of the scale can be assumed to be 300 $\mu$m at a measuring length of one meter. In this example the maximum error of the scale after calibration will then be $\pm$ 3 $\mu$m.

The invention will now be described in more detail with reference to the accompanying drawing, which illustrates a preferred embodiment of the invention.

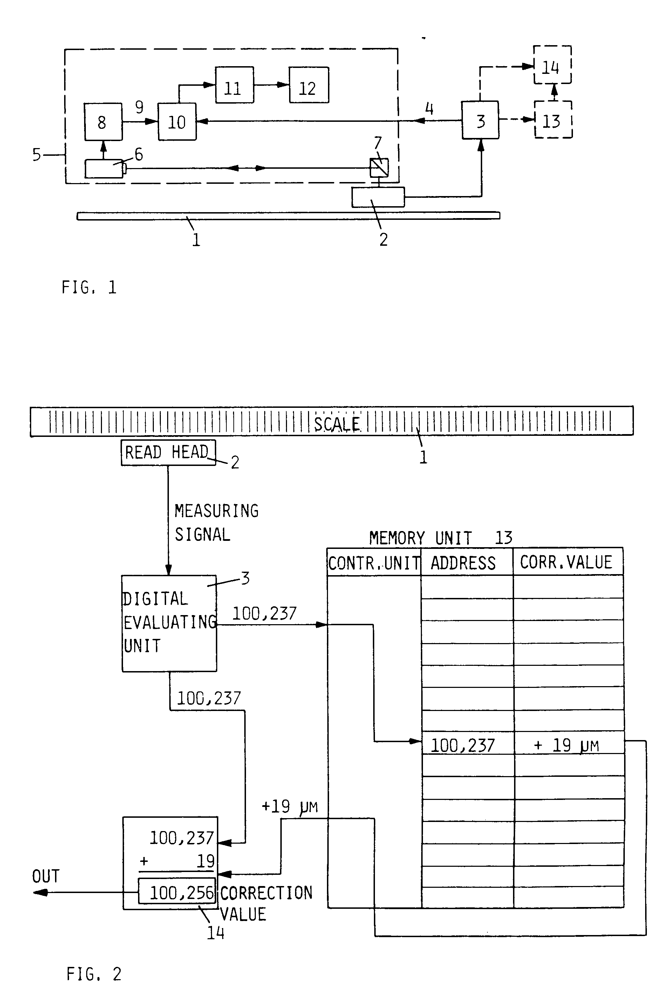

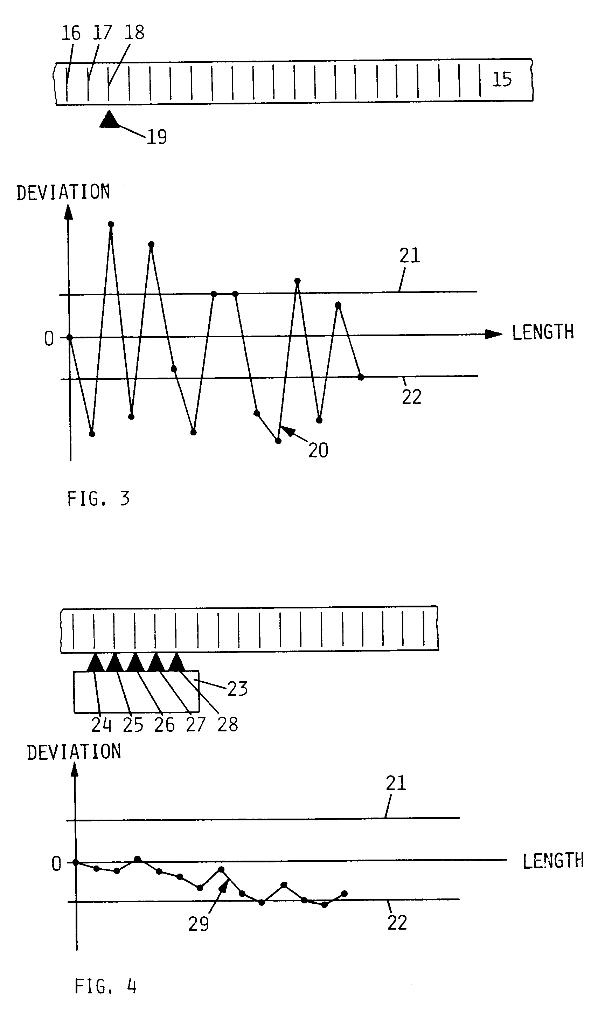

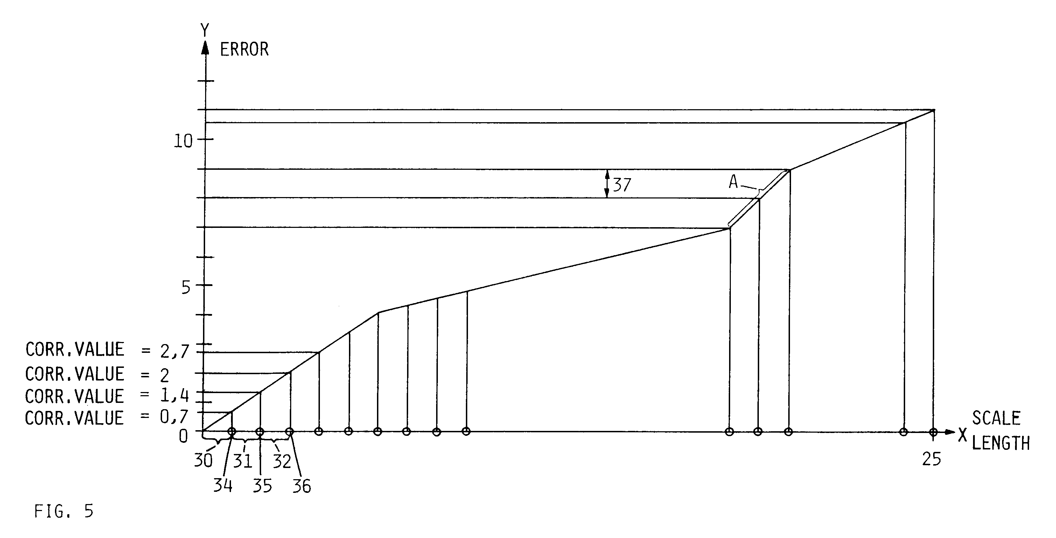

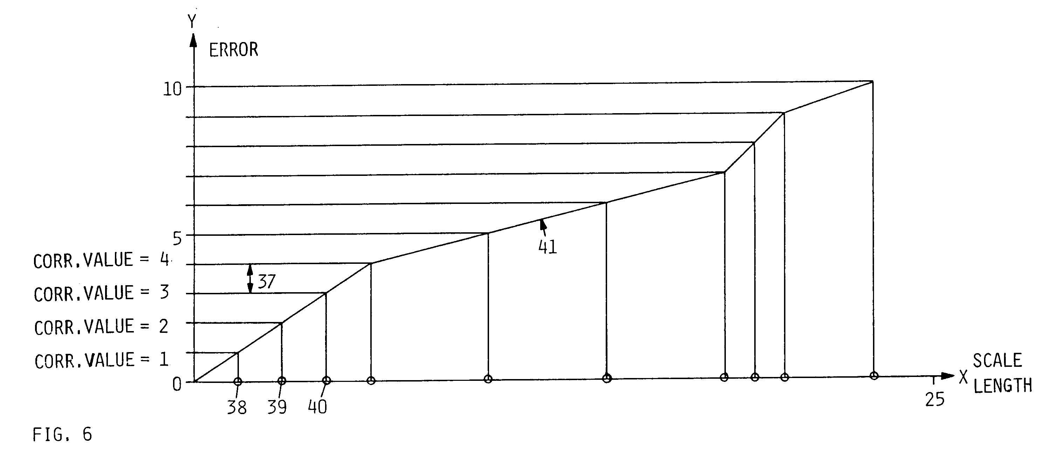

Figure 1 is a block schematic of a measuring device, with whose aid the invention can be carried out. Figure 2 illustrates the measuring device shown in Figure 1 during a reading-off sequence. Figure 3 is a schematic illustration of the scale incorporated in the measuring device. Figure 4 illustrates schematically the variableness of the error curve. Figure 5 illustrates an imaginery characteristic for a calibrated scale. Figure 6 illustrates a variation of the characteristic illustrated in Figure 5.

Figure 1 illustrates the system during a calibration operation. The reference I identifies the scale to be calibrated. References 2 and 3 identify respectively the read head and digital evaluation unit associated with the scale system. The frame or enclosure 5 shown in broken lines encloses the automatic calibrating unit, the length reference of which comprises a laser measuring system 6,7. And reference 8 identifies the digital evaluation unit of the laser meter.

The measured "true value" obtained from the digital evaluation unit 3 of the scale I present during the calibration process is compared in a unit 10 with a "set-point value" 9 obtained from the digital unit 8 of the laser measuring system.

The measured differences are stored in a memory in a data processor 11, together with their length address. Subsequent to completing a calibrating sequence, the values are transferred to an E-prom programmer 12 where the measured corrections and their addresses are permanently stored in one or more E-proms. The scale system I has a memory unit I3 and a correction unit 14 which are not used during the calibration procedure.

The following procedure is taken, when measuring with the aid of the calibrated system, c.f. Figure 2. A "rough value" is obtained from the digital evaluating unit 3 of the scale I, i.e. a recorded value to which no correction has been made. (In the example illustrated in Figure 2, the value = 100,237). This rough value indicates an address in the memory unit corresponding to the value 100,237. The correction value (in the example = 19 $\mu$m) for the rough value 100,237 is stored at this address. If there is no value stored for the rough value in question, a control unit in the memory unit selects the correction value stored in a nearest lower address.

Figure 3 illustrates a measuring system comprising a scale 15 incorporating scale graduations or divisions 16, 17, 18 etc. In this case the length is determined by means of a read-out head I9 with punctiform read-out, i.e. read-out of solely one individual division or graduation, this head calculating the number of divisions or graduations passed. The positional error of each individual graduation will then directly cause a corresponding error in the length recording of the system, as illustrated in a diagram 20. The lines 21 and 22 of the diagram 20 illustrate the maximum permitted error. All points located above or beneath the lines 21 and 22 must be corrected. There are nine such points in the illustrated example.

Figure 4 illustrates a system with gradual variability in the error curve. The scale 15 is the same as in Figure 3 and with the same individual positional error of the scale graduations 16, 17, 18 etc. as in the above example. In this case the read-out head 23 is constructed for simultaneous read-out of the measurement values or of the error deviations over more than one scale graduation. This can be effected, for example, in the manner illustrated in Figure 4 using a plurality of read-out heads, there being used in this example five heads 24-28 which are mutually displaced a whole number of multiples of the scale graduation and read simultaneously the same information from the scale. By forming the mean value of these five values, there is obtained a value where the individual variations in the positions of the scale graduations l6, l7, l8 etc. have but a slight influence, as is evident from the diagram 29, in which only one solitary point falls outside the lines 21 and 22. Thus, in this case use of a scale system employing such a "gradually rising or falling error curve" reduces the number of corrections required to 1/9th of those which would otherwise be found necessary.

Other known methods of obtaining such a gradually rising or falling error curve involve, for example, the use of a scale system constructed on the "moare" technique or a capacitive system, as described in Swedish Patent Specification No. 7714010-1.

Figure 5 illustrates an imaginary characteristic for a calibrated scale, in which 25 length units of the scale error curve are shown. The scale length is plotted along the X-axis and the measured error along the Y-axis. These values are inserted into the memory unit l3, Figure 2. The distances 30, 31, 32 etc. between the calibrating points 34, 35, 36 etc. for which the values are stored are of equal length and must be selected in a manner such that the error 37 at the steepest region of the error curve (at a point A in Figure 5) will not be greater than the permitted error between two calibration points 34, 35, 36 etc. If the permitted error is two units, the maximum permitted error in the correction table $= \frac{1}{2} . 2 = $ l unit. Since the size of the error at point A is one unit for each scale graduation, 25 calibration points are required in the illustrated case.

A variation of the aforegoing is illustrated in Figure 6. In this instance the distance between the calibration points 38, 39,40 etc. is not constant, but is made dependent on the size of the permitted error 37. Each time the error addition or error surplus exceeds the permitted error 37 after the latest calibration point, a further calibration point is entered into the Figure 2 memory of the memory unit l3. Only ten calibration points are required in this variant, as distinct from the method according to Figure 5.

This method avoids unnecessary compaction with respect to the spacing between the calibration points at regions of low steepness on the error curve, thereby reducing the space required in the memory unit 13.

Figures 5 and 6 illustrate an error curve which exhibits solely positive error surpluses. It will be understood, however, that other types of error curves may be used, such as curves with alternating positive and negative error surpluses, or with solely negative error surpluses.

## Claims

1. A method of increasing the accuracy of a length measuring system by calibrating the system against a more accurate reference system and storing the correction values obtained by calibration in a memory store, characterized by incorporating a linear scale system in the form of an absolute measurement scale system in said length measuring system; forming mean values for measured values by incorporating at least two scale graduations in each measurement, causing each measured value to be influenced by the individual variations in the position of said graduations and, thus, causing the error contribution of the scale system to rise or fall gradually; allowing the error contribution to be greater than a predetermined error of the length measuring system.

2. A method according to Claim 1, characterized by making the distances between the calibrating positions along the scale for which the correction values are stored in the memory predetermined distances of mutually equal magnitude, and by selecting said distances such that the greatest permitted error is not exceeded at any location between two mutually sequential calibration positions (Fig. 5).

3. A method according to Claim 1, characterized by making the distance between the calibrating positions along the scale for which the correction values are stored in the memory variable distances and dependent on the steepness of the error curve such that the error occuring between two mutually sequential calibrating positions is smaller than or equal to half of a maximum permitted error for the scale (Fig. 6).

## Revendications

1. Méthode pour augmenter la précision d'un système de mesure de longueurs par étalonnage du système vis-à-vis d'un système de référence plus exact, et pour stocker dans une mémoire de stockage les valeurs de correction obtenues par l'étalonnage, méthode caractérisée en ce qu'elle incorpore un système d'échelle linéaire se présentant sous la forme d'un système d'échelle de mesure absolue dans le système de mesure de longueurs ; à former des valeurs moyennes des valeurs mesurées en incorporant au moins deux graduations d'échelle dans chaque mesure ; à influencer chaque valeur mesurée par les variations individuelles de la position des graduations pour faire ainsi monter ou descendre progressivement la contribution d'erreur du système d'échelle ; et à permettre à la contribution d'erreur d'être supérieure à une erreur prédéterminée du système de mesure de longueurs.

2.  Méthode selon la revendication 1, caractérisée en ce qu'elle consiste à donner aux distances entre les points d'étalonnage le long de l'échelle, pour lesquels les valeurs de correction sont stockées en mémoire, des valeurs de distance prédéterminées de même grandeur, et à sélectionner ces distances de façon que l'erreur maximum permise ne soit dépassée en aucun point entre deux points d'étalonnage mutuellement successifs (figure 5).

3.  Méthode selon la revendication 1, caractérisée en ce qu'elle consiste à donner aux distances entre les points d'étalonnage le long de l'échelle, pour lesquels les valeurs de correction sont stockées en mémoire, des valeurs de distance variables dépendant de la raideur de la courbe d'erreur, de façon que l'erreur apparaissant entre deux points d'étalonnage mutuellement successifs, soit inférieure ou égale à la moitié de l'erreur maximum permise pour l'échelle (figure 6).

**Patentansprüche**

1.  Verfahren zur Erhöhung der Genauigkeit eines Längenmeßsystems durch Kalibrieren des Systems mit Hilfe eines genaueren Referenzsystems und Abspeichern der durch die Kalibrierung erhaltenen Korrekturwerte in einem Speicher, dadurch **gekennzeichnet**, daß ein System mit linearer Skala in Form eines Absolutmessungs-Skalenytems in das Längenmeßsystem eingefügt wird; daß Mittelwerte für gemessene Werte durch Verwendung von mindestens zwei Skalengraduierungen bei jeder Messung gebildet werden, wodurch jeder gemessene Wert durch die individuellen Veränderungen der Lage dieser Graduierungen beeinflußt wird und dadurch der Fehleranteil des Skalensystems graduell erhöht oder gesenkt wird; so daß der Fehleranteil größer sein kann, als ein vorbestimmter Fehler des Längenmeßsystems.

2.  Verfahren nach Anspruch 1, dadurch **gekennzeichnet**, daß die Abstände zwischen den Kalibrierungsstellen längs der Skala, für die die Korrekturwerte im Speicher abgespeichert worden sind, zu vorbestimmten Abständen wechselseitig gleicher Größe gemacht werden und daß die Abstände so gewählt werden, daß der größte zugelassene Fehler an keiner Stelle zwischen zwei aufeinander folgenden Kalibrierungsstellen überschritten wird (Fig. 5).

3.  Verfahren nach Anspruch 1, dadurch **gekennzeichnet**, daß die Abstände zwischen den Kalibrierungsstellen längs der Skala, für die die Korrekturwerte im Speicher abgespeichert sind, zu variablen Abständen und abhängig von der Steilheit der Fehlerkurve gemacht werden, so daß der Fehler, der zwischen zwei aufeinanderfolgenden Kalibrierungsstellen auftritt, kleiner ist als die Hälfte oder gleich der Hälfte eines maximal zulässigen Fehlers für die Skala ist (Fig. 6).

FIG. 1

FIG. 2

16 17 18

15

19

DEVIATION

21

0          LENGTH

22

20

FIG. 3

23

24 25 26 27 28

DEVIATION

21

0          LENGTH

29          22

FIG. 4

7

FIG. 5

FIG. 6

EP 0 182 394 B1